# EUROPÄISCHE PATENTANMELDUNG

(11) **EP 4 227 556 A1**
(43) Veröffentlichungstag der Anmeldung: **16.08.2023**
(21) Anmeldenummer: 23155865.1
(22) Anmeldetag: 09.02.2023
(51) Int. Cl.: F16H 57/04, F16H 49/00

(54) **SPANNUNGSWELLENGETRIEBE**

(30) Priorität: 11.02.2022 LU 501457
(71) Anmelder: Ovalo GmbH, 65555 Limburg (DE)
(72) Erfinder:
(74) Vertreter: Hoffmann, Jürgen

(57) **Zusammenfassung**

Die Erfindung betrifft ein Spannungswellengetriebe mit einem Circularspline, einem Flexspline, einem Wellengenerator, der ein Lager und ein mittels des Lagers relativ zu dem Flexspline rotierbar gelagertes Formungsmittel aufweist, welches das Lager und/oder den Flexspline zu einer von der Kreisform verschiedenen Form formt, und mit einem unmittelbar an das Lager angrenzenden Reservoir, das Schmierfett beinhaltet. Das Spannungswellengetriebe zeichnet sich dadurch aus, dass ein Kontaktverhinderungsmittel, insbesondere eine Abschirmung, vorhanden ist, das einen unmittelbaren Kontakt des in dem Reservoir befindlichen Schmierfetts mit dem Formungsmittel verhindert.

## Beschreibung

Die Erfindung betrifft ein Spannungswellengetriebe mit einem Circularspline, einem Flexspline, einem Wellengenerator, der ein Lager und ein mittels des Lagers relativ zu dem Flexspline rotierbar gelagertes Formungsmittel aufweist, welches das Lager und/oder den Flexspline zu einer von der Kreisform verschiedenen Form formt, und mit einem unmittelbar an das Lager angrenzenden Reservoir, das Schmierfett beinhaltet.

Ein Spannungswellengetriebe besitzt zumeist ein starres, ringförmiges, innenverzahntes Zahnrad, das als Circularspline bezeichnet wird, und ein flexibles außenverzahntes Zahnrad, das im Inneren des starren innenverzahnten Zahnrads angeordnet ist und das als Flexspline bezeichnet wird. Der Circularspline und der Flexspline weisen eine unterschiedliche Zahl von Zähnen auf. Der Flexspline kann in Form eines Flextopfes ausgebildet sein. Der Wellengenerator verformt den Flexspline zu einer ovalen, insbesondere elliptischen, Form und bringt so die Außenverzahnung des Flexsplines mit der Innenverzahnung des Circularsplines an jedem Ende der Ellipsen-Hauptachse miteinander in Eingriff. Ein Spannungswellengetriebe mit einem Flexspline in Form eines Flextopfes ist beispielsweise aus US 6 050 155 A bekannt.

Aus EP 3 336 383 A2 ist ein Spannungswellengetriebe mit einem Circularspline bekannt, dessen Innenverzahnung mit der Außenverzahnung eines Flextopfes in Zahneingriff steht, der eine Flextopfwandung und einen Flextopfboden aufweist. Das Spannungswellengetriebe zeichnet sich dadurch aus, dass der Circularspline einen axial über die Innenverzahnung hinausragenden Teil aufweist, der zusammen mit einem Teilabschnitt der Außenseite der Flextopfwandung ein Schmierstoffreservoir begrenzt, wobei das Verhältnis der axialen Länge des axial über die Innenverzahnung hinausragenden Teils des Circularsplines zu der axialen Länge der Flextopfwandung vom Flextopfboden bis zur Außenverzahnung im Bereich von 1/10 bis 8/10 liegt.

Zur Schmierung von Spannungswellengetriebe wird oft Schmierfett verwendet. Hierbei ist es beispielsweise möglich und üblich, den von dem Wellengenerator und einem topfförmigen Flexspline begrenzten Raum als Reservoir für das Schmierfett zu verwenden.

Aus DE 11 2011 105 253 T5 und aus DE 11 2013 004 710 T5 sind Spannungswellengetriebe vom Zylinderhuttyp bekannt, bei denen der Flexspline eine Hutform aufweist.

Es gibt auch Spannungswellengetriebe in Ringbauweise, bei denen der Flexspline ringförmig ausgebildet ist. Zumeist weisen diese Spannungswellengetriebe ein weiteres starres, ringförmiges, innenverzahntes Zahnrad auf, das als Dynamicspline bezeichnet wird. Der Dynamicspline steht ebenfalls mit dem Flexspline in Zahneingriff. Der Dynamicspline und der Circularspline weisen eine unterschiedliche Zahl von Zähnen auf.

Aus der europäischen Patentanmeldung EP 0 206 754 A2 ist ein Spannungswellengetriebe mit einem Flexspline bekannt, bei dem in dem von dem Flexspline umgebenen Raum eine Patrone mit einem Schmiermittel angeordnet ist.

Es ist die Aufgabe der vorliegenden Erfindung, die Lebensdauer des Spannungswellengetriebes zu erhöhen.

Die Aufgabe wird durch ein Spannungswellengetriebe gelöst, das dadurch gekennzeichnet ist, dass ein Kontaktverhinderungsmittel, insbesondere eine Abschirmung, vorhanden ist, das einen unmittelbaren Kontakt des in dem Reservoir befindlichen Schmierfetts mit dem Formungsmittel verhindert.

In erfindungsgemäßer Weise wurde erkannt, dass eine lange Lebensdauer eines Spannungswellengetriebes erreicht werden kann, wenn eine ununterbrochene und stets ausreichende Zufuhr von Schmierfett aus dem Reservoir zu den in unmittelbarem Kontakt stehenden und relativ zueinander beweglichen Teilen des Spannungswellengetriebes gewährleistet ist.

In erfindungsgemäßer Weise wurde außerdem zunächst erkannt, dass Teile des im Reservoir bevorrateten Schmierfetts über die Lebensdauer des Getriebes austrocknen, was bislang unerkannt oder unbeachtet geblieben ist. Weiter wurde in erfindungsgemäßer Weise erkannt, dass es in mehrfacher Hinsicht nachteilig ist, wenn Teile des im Reservoir bevorrateten Schmierfetts austrocknen. Zum einen stehen sehr stark ausgetrocknete Anteile für eine Schmierung des Spannungswellengetriebes nicht mehr zur Verfügung; zum anderen behindern diese stark eingetrockneten Anteile den Fluss des noch nicht eingetrockneten Anteils an Schmierfett aus dem Reservoir zu den miteinander unmittelbar in Kontakt stehenden und relativ zueinander beweglichen Teilen des Spannungswellengetriebes, insbesondere zu dem Lager, mittels dem das Formungsmittel rotierbar gelagert ist, und zu den Verzahnungen von Circularspline und Flexspline. Insbesondere kann es vorkommen, dass die ausgetrockneten Anteile wie eine Sperre und/oder eine Dichtung wirken, die ein Nachfließen von Schmierfett aus dem Reservoir zu den Schmierstellen des Spannungswellengetriebes verhindern. Aber auch die Anteile des Schmierfetts, die nur geringfügig ausgetrocknet sind, sind zwar prinzipiell noch fließfähig, weisen aber schlechtere Schmiereigenschaften auf, weil sie weniger Grundöl beinhalten.

In erfindungsgemäßer Weise wurde weiter erkannt, dass der Effekt des Austrocknens im Wesentlichen durch einen permanenten Kontakt einer Schicht des Schmierfetts mit dem Formungsmittel verursacht wird, das sich relativ zu dem im Reservoir angeordneten Schmierfett mit hoher Rotationsgeschwindigkeit bewegt. Aufgrund dieses ständigen Kontaktes und der hierbei entstehenden Reibungswärme kommt es zu der erwähnten Austrocknung, weil der erwärmte Anteil des Schmierfetts nach und nach sein Grundöl verliert.

Das Kontaktverhinderungsmittel verhindert einen unmittelbaren Kontakt des in dem Reservoir befindlichen Schmierfetts mit dem Formungsmittel und somit eine Reibung zwischen dem Formungsmittel und dem Schmierfett und damit das Entstehen von Reibungswärme und damit letztlich ein Austrocknen des Schmierfetts.

Soweit im Rahmen dieser Anmeldung von Schmierfett die Rede ist, sind insbesondere pastöse Schmierstoffe, die ein Schmieröl (Grundöl) und einen Eindicker, wie beispielsweise Seife, Bentonite, Polyharnstoffe, PTFE, und ggf. Additive beinhalten, gemeint.

Vorzugsweise ist das Spannungswellengetriebe derart ausgebildet, dass ein Kontakt des Schmierfetts mit dem Formungsmittel und vorzugsweise auch mit dem mit dem Formungsmittel in unmittelbarem Kontakt stehenden Lagerinnenring des Lagers ausgeschlossen ist. Das Verhindern eines unmittelbaren Kontakts des in dem Reservoir angeordneten Schmierfettes mit dem Lagerinnenring ist vorteilhaft, weil dieser mit derselben Rotationsfrequenz rotiert, wie das Formungsmittel, und weil der oben beschriebene Effekt des Austrocknens daher auch an dem Lagerinnenring auftreten könnte.

Ein axialer Spalt zwischen dem Lagerinnenring und der Abschirmung ist in der Praxis zumeist unschädlich, weil das Schmierfett durch die Zentrifugalkraft daran gehindert ist, durch diesen axialen Spalt unmittelbar zu dem Lagerinnenring und/oder zu dem Formungsmittel zu gelangen. Allerdings kann die Abschirmung bei einer ganz besonders vorteilhaften Ausführung derart ausgebildet sein, dass kein axialer Spalt verbleibt oder lediglich ein axialer Spalt verbleibt, der gerade nur so breit ist, dass ein Reibkontakt der Abschirmung mit dem Formungsmittel und/oder dem Lagerinnenring vermieden ist.

Vorzugsweise ist das Kontaktverhinderungsmittel derart ausgebildet, dass es außer einer Abschirmfunktion keine weitere Funktion hat. Eine solche Ausführung ist im Hinblick auf eine einfache und kostengünstige Herstellung besonders vorteilhaft. Insbesondere kann vorteilhaft vorgesehen sein, dass das Kontaktverhinderungsmittel nicht dazu dient, eine Welle des Spannungswellengetriebes und/oder Teile des Wellengenerators rotierbar zu lagern. Vorzugsweise ist das Kontaktverhinderungsmittel auch nicht Teil des Formungsmittels und/oder des Wellengenerators. Allerdings ist es auch nicht grundsätzlich ausgeschlossen, dass das Kontaktverhinderungsmittel eine weitere Funktion hat.

Das Reservoir kann insbesondere derart ausgebildet und angeordnet sein, dass es wenigstens teilweise durch wenigstens einen Teil des Wellengenerators, insbesondere durch eine Außenfläche des Formungsmittels, begrenzt ist, wobei das Kontaktverhinderungsmittel vorteilhaft unmittelbar in dem Reservoir angeordnet sein kann.

Das Formungsmittel kann beispielsweise als eine ovale, insbesondere elliptische, Scheibe ausgebildet sein oder eine ovale, insbesondere elliptische, Scheibe aufweisen. Alternativ kann das Formungsmittel durch einen ovalen, insbesondere elliptischen, Abschnitt einer Welle gebildet sein. Es ist alternativ auch möglich, dass das Formungsmittel Teil eines Two-Rollers oder eines Three-Rollers ist. Ein Two-Roller bzw. Three-Rollers kann beispielsweise durch einen rotierbar gelagerten zwei bzw. dreiarmigen Träger gebildet sein, an dessen freien Enden jeweils ein Lager, insbesondere ein Wälzlager, angeordnet ist.

Vorzugsweise ist das Lager des Wellengenerators als Wälzlager, insbesondere als einreihiges oder mehrreihiges Kugellager, ausgebildet. Es ist jedoch beispielsweise auch möglich, dass das Lager des Wellengenerators als Gleitlager ausgebildet ist.

Bei einer ganz besonders vorteilhaften Ausführung weist das Wälzlager einen mit dem Formungsmittel in unmittelbarem Kontakt stehenden Lagerinnenring auf, wobei das Kontaktverhinderungsmittel auch einen unmittelbaren Kontakt des in dem Reservoir befindlichen Schmierfetts mit dem Lagerinnenring verhindert. Diese Ausführung hat, wie bereits erwähnt, den ganz besonderen Vorteil, dass der oben geschilderte Effekt des Austrocknens des Schmierfettes auch nicht im Bereich des Lagerinnenrings auftreten kann. Die Vermeidung eines unmittelbaren Kontaktes des Schmierfettes mit dem Lagerinnenring ist von besonderem Vorteil, weil der Lagerinnenring mit derselben Rotationsfrequenz rotiert, wie das Formungsmittel und der oben geschilderte Effekt des Austrocknens dort ebenfalls auftreten kann. Die Vermeidung eines Kontaktes des Schmierfettes mit dem Lageraußenring ist allerdings unproblematisch, weil dieser mit einer viel geringeren Rotationsfrequenz rotiert als der Lagerinnenring.

Vorzugsweise weist das Reservoir zumindest eine Öffnung auf, durch die hindurch das Schmierfett austreten kann, um direkt oder indirekt zu den zu schmierenden Teilen des Spannungswellengetriebes zu gelangen. Insbesondere kann die Öffnung vorteilhaft derart ausgebildet und angeordnet sein, dass das Schmierfett axial aus dem Reservoir austritt. Insbesondere kann die Öffnung vorteilhaft derart angeordnet sein, dass das Schmierfett aus dem Reservoir unmittelbar zu dem Lager des Wellengenerators gelangen kann, mittels dem das Formungsmittel relativ zu dem Flexspline rotierbar gelagert ist.

Ganz allgemein kann die Öffnung vorteilhaft im Wesentlichen ringförmig ausgebildet sein, was vorteilhaft für einen zuverlässigen und kontinuierlichen Schmierfettfluss aus dem Reservoir zu den zu schmierenden Teilen des Spannungswellengetriebes ist.

Insbesondere kann die Öffnung koaxial zu dem Wellengenerator und/oder koaxial zu dem Flexspline und/oder koaxial zu dem Circularspline angeordnet sein.

Beispielsweise kann die Öffnung als Spalt zwischen dem Flexspline oder dem Lageraußenring einerseits und dem Kontaktverhinderungsmittel, insbesondere einen Rand einer Abschirmung des Kontaktverhinderungsmittels, ausgebildet sein. Beispielsweise kann die Öffnung auch in einer Abschirmwandung des Kontaktverhinderungsmittels ausgebildet sein.

Bei einer besonders vorteilhaften Ausführung ist das Formungsmittel (und vorzugsweise auch der Lagerinnenring) relativ zu dem Kontaktverhinderungsmittel rotierbar angeordnet. Eine solche Ausführung ermöglicht es, dass das Kontaktverhinderungsmittel, welches das in dem Reservoir befindliche Schmierfett von dem Formungsmittel entfernt hält, mit derselben oder wenigstens einer sehr ähnlichen Rotationsfrequenz rotiert wie das Schmierfett, so dass der oben beschriebene Effekt des Austrocknens vermieden ist.

Vorzugsweise ist das Spannungswellengetriebe derart ausgebildet, dass das Kontaktverhinderungsmittel in keinem unmittelbaren Kontakt zu dem Formungsmittel oder zu einem mit dem Formungsmittel unmittelbar, insbesondere starr, verbundenen Bauteil, insbesondere einem mit dem Formungsmittel in unmittelbarem Kontakt stehenden Lagerring, steht. Beispielsweise kann das Kontaktverhinderungsmittel an einem Getriebebauteil angeordnet, insbesondere befestigt, sein, das mit einer geringeren Rotationsfrequenz rotiert, als das Formungsmittel. Auch dies ermöglicht es, dass das Kontaktverhinderungsmittel, welches das in dem Reservoir befindliche Schmierfett von dem Formungsmittel entfernt hält, mit derselben oder wenigstens einer sehr ähnlichen Rotationsfrequenz rotiert wie das Schmierfett. Insbesondere kann alternativ oder zusätzlich vorteilhaft vorgesehen sein, dass das Kontaktverhinderungsmittel in keinem unmittelbaren Kontakt zu dem Wellengenerator, insbesondere zu dem Lager des Wellengenerators steht.

Das Spannungswellengetriebe kann eine drehstarr mit dem Formungsmittel verbundene erste Welle aufweisen, die wenigstens teilweise in dem Reservoir angeordnet sein kann. Es ist alternativ beispielsweise auch möglich, dass das Formungsmittel durch einen Abschnitt einer ersten Welle gebildet ist, die wenigstens teilweise in dem Reservoir angeordnet sein kann. Die erste Welle kann insbesondere als Antriebswelle des Spannungswellengetriebes fungieren. In einem Umkehrbetrieb des Spannungswellengetriebes kann die erste Welle natürlich auch als eine Abtriebswelle fungieren.

Bei einer solchen Ausführung ist vorzugsweise vorgesehen, dass das Kontaktverhinderungsmittel einen unmittelbaren Kontakt des in dem Reservoir befindlichen Schmierfetts mit der ersten Welle verhindert. Auf diese Weise wird vorteilhaft erreicht, dass das Kontaktverhinderungsmittel das in dem Reservoir befindliche Schmierfett von der ersten Welle entfernt hält, so dass der oben beschriebene Effekt des Austrocknens durch einen Kontakt des Schmierfetts mit der ersten Welle vermieden ist.

Hinsichtlich der Ausbildung des Flexsplines gibt es keine grundsätzlichen Beschränkungen. Der Flexspline kann topfförmig oder hutförmig oder ringförmig ausgebildet sein.

Insbesondere kann der Flexspline einen Teil einer das Reservoir begrenzenden Wandung bilden. Beispielsweise kann bei einer solchen Ausführung das Kontaktverhinderungsmittel, insbesondere unmittelbar und/oder drehstarr, an dem Flexspline angeordnet, insbesondere befestigt, sein.

Das Spannungswellengetriebe kann eine zweite Welle aufweisen, die insbesondere als Abtriebswelle fungieren kann. In einem Umkehrbetrieb des Spannungswellengetriebes kann die zweite Welle natürlich auch als eine Antriebswelle fungieren. Die zweite Welle kann, insbesondere unmittelbar und/oder drehstarr, mit dem Flexspline oder mit dem Circularspline oder, insbesondere bei einer ringförmigen Ausbildung des Flexsplines, einem Dynamicspline verbunden sein. Die zweite Welle kann gemeinsam einstückig mit dem Flexspline oder mit dem Circularspline oder, insbesondere bei einer ringförmigen Ausbildung des Flexsplines, einem Dynamicspline hergestellt sein. Alternativ oder zusätzlich kann die zweite Welle als Hohlwelle ausgebildet sein.

Insbesondere da die zweite Welle mit einer viel niedrigeren Rotationsfrequenz rotiert als das Formungsmittel (und die evtl. damit verbundene erste Welle), kann das Kontaktverhinderungsmittel, insbesondere unmittelbar und/oder drehstarr, an der zweiten Welle befestigt sein.

Das Kontaktverhinderungsmittel kann vorteilhaft, insbesondere ausschließlich, reibschlüssig befestigt sein. Eine solche Ausführung ermöglicht eine einfache Montage. Alternativ oder zusätzlich kann das Kontaktverhinderungsmittel formschlüssig, beispielsweise durch eine Rast- oder Schraubverbindung, und/oder stoffschlüssig, beispielsweise durch eine Klebung, befestigt sein.

Alternativ ist es beispielsweise auch möglich, dass das Kontaktverhinderungsmittel gemeinsam einstückig mit der zweiten Welle hergestellt ist.

Bei einer besonders vorteilhaften Ausführung weist der Wellengenerator eine Kupplung, insbesondere eine Oldhamkupplung, auf. Eine solche Ausführung hat den ganz besonderen Vorteil, dass ein Axialversatz der ersten Welle ausgeglichen werden kann. Auch bei einer solchen Ausführung kann vorteilhaft vorgesehen sein, dass das Kontaktverhinderungsmittel einen unmittelbaren Kontakt des in dem Reservoir befindlichen Schmierfetts mit dem Formungsmittel und/oder mit den Teilen der Oldhamkupplung verhindert.

Das Kontaktverhinderungsmittel kann vorteilhaft wenigstens eine Abschirmwandung aufweisen. Insbesondere kann das Kontaktverhinderungsmittel ringförmig oder kegelförmig ausgebildet sein. Das Kontaktverhinderungsmittel oder wenigsten eine Abschirmwandung des Kontaktverhinderungsmittels können vorteilhaft, insbesondere auch im Hinblick auf die Vermeidung einer Unwucht, rotationssymmetrisch, insbesondere in einem Axialquerschnitt kreisrund, ausgebildet sein.

Das Kontaktverhinderungsmittel kann vorteilhaft koaxial zu dem Wellengenerator und/oder koaxial zu dem Flexspline und/oder koaxial zu dem Circularspline angeordnet sein. Eine solche Ausführung ist besonders vorteilhaft, um eine Unwucht zu vermeiden.

Bei einer ganz besonders kompakten Ausführung des Spannungswellengetriebes ragt das Kontaktverhinderungsmittel axial in den von dem Lager umgebenen Raum.

Bei einer besonders langlebigen Ausführung ist an einer Abschirmwandung des Kontaktverhinderungsmittels wenigstens eine Verstärkung, insbesondere eine Verstärkungsstrebe oder eine zickzackförmige Verstärkung, angeordnet.

Die Abschirmwandung kann einen im Querschnitt radialen und/oder einen im Querschnitt axialen und/oder einen im Querschnitt schräg verlaufenden Abschnitt aufweisen. Insbesondere kann die Abschirmwandung einen hülsenförmigen und/oder einen scheibenförmigen und/oder einen ringförmigen und/oder einen kegelförmigen Abschnitt aufweisen. Durch eine geschickte Kombination der möglichen Ausbildungsarten unterschiedlicher Abschnitte der Abschirmwandung kann die Abschirmung an die räumlichen Parameter des Reservoirs und/oder des Wellengenerators angepasst werden.

Bevorzugt ist eine Ausführung des Spannungswellengetriebes, das eine Lebensdauerschmierung aufweist. Unter einer Lebensdauerschmierung wird insbesondere verstanden, dass das Spannungswellengetriebe bei seiner Herstellung einmalig mit Schmierfett versehen wird, das bis zum geplanten Ende der Nutzungsdauer des Spannungswellengetriebes nicht ausgetauscht oder erneuert werden muss. Die Lebensdauerschmierung kann beispielsweise dadurch realisiert sein, dass bei der Herstellung des Spannungswellengetriebes eine für die vorgesehene Lebensdauer ausreichende Menge an Schmierfett in das Reservoir eingefügt wird. Alternativ kann das Reservoir eine Nachfüllöffnung aufweisen, durch die hindurch frisches Schmierfett eingebracht werden kann. Insbesondere kann ein Verschluss zum Verschließen der Nachfüllöffnung vorhanden sein und/oder oder es kann in der Nachfüllöffnung ein Nachfüllventil angeordnet sein.

Von ganz besonderem Vorteil ist ein Roboter, insbesondere ein Industrieroboter, der wenigstens ein erfindungsgemäßes Spannungswellengetriebe beinhaltet. Insbesondere kann das erfindungsgemäße Spannungswellengetriebe in einem Robotergelenk eingesetzt werden. Durch die Verwendung des erfindungsgemäßen Spannungswellengetriebes kann die Zuverlässigkeit des Roboters erhöht und die Ausfallzeit verringert werden.

Von besonderem Vorteil ist insbesondere eine Fahrzeugkomponente, beispielsweise ein aktives Fahrwerk oder eine Lenkung oder ein Nockenwellenversteller oder eine Stellvorrichtung zur Veränderung des Expansionshubes und/oder des Verdichtungsverhältnisses eines Verbrennungsmotors für ein Kraftfahrzeug, die wenigstens ein erfindungsgemäßes Spannungswellengetriebe aufweist. Durch die Verwendung einer solchen Fahrzeugkomponente kann die Zuverlässigkeit und Sicherheit des Fahrzeuges erhöht werden. Außerdem ist es vorteilhaft möglich, längere Inspektions- und/oder Reparaturintervalle vorzusehen, was die Wirtschaftlichkeit des Fahrzeuges erhöht.

Von ganz besonderem Vorteil ist ein Fahrwerk, insbesondere ein aktives Fahrwerk für ein Kraftfahrzeug, das wenigstens ein erfindungsgemäßes Spannungswellengetriebe aufweist. Durch die Verwendung des erfindungsgemäßen Spannungswellengetriebes kann die Zuverlässigkeit des Fahrwerks erhöht werden. Insbesondere können umfangreiche Reparaturarbeiten vermieden werden. Dies ist von besonderem Vorteil, weil eine Reparatur oder ein Austausch eines verschlissenen Spannungswellengetriebes bei einem Fahrwerk besonders aufwendig ist, da viele andere Bauteile für die Reparatur vorübergehend demontiert werden müssen.

Von ganz besonderem Vorteil ist eine Lenkung, insbesondere PKW-Lenkung oder LKW-Lenkung, die wenigstens ein erfindungsgemäßes Spannungswellengetriebe aufweist. Die Lenkung kann insbesondere eine Servolenkung und/oder eine Überlagerungslenkung sein. Durch die Verwendung des erfindungsgemäßen Spannungswellengetriebes kann die Zuverlässigkeit der Lenkung erheblich erhöht werden. Insbesondere können umfangreiche Reparaturarbeiten vermieden werden. Dies ist von besonderem Vorteil, weil eine Reparatur oder ein Austausch eines verschlissenen Spannungswellengetriebes bei einer Lenkung besonders aufwendig ist, da viele andere Bauteile für die Reparatur vorübergehend demontiert werden müssen.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Spannungswellengetriebe nach dem Stand der Technik,
- Fig.2: ein erstes Ausführungsbeispiel eines erfindungsgemäßen Spannungswellengetriebes,
- Fig.3: ein zweites Ausführungsbeispiel eines erfindungsgemäßen Spannungswellengetriebes,
- Fig.4: ein drittes Ausführungsbeispiel eines erfindungsgemäßen Spannungswellengetriebes, und
- Fig. 5: ein viertes Ausführungsbeispiel eines erfindungsgemäßen Spannungswellengetriebes.

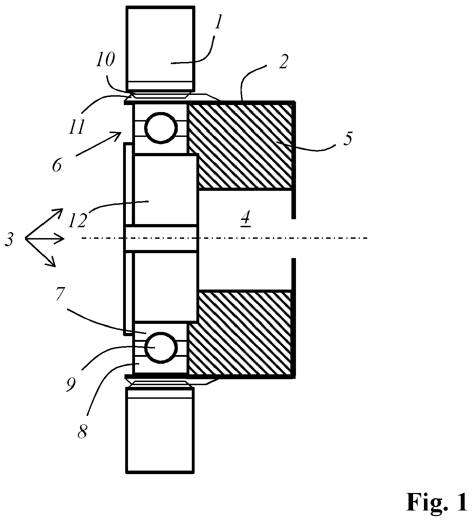

Figur 1 zeigt in einer schematischen Schnittdarstellung ein Spannungswellengetriebe nach dem Stand der Technik mit einem Circularspline 1, einem topfförmigen Flexspline 2, einem Wellengenerator 3, der ein mittels eines Lagers 6 relativ zu dem Flexspline 2 rotierbar gelagertes Formungsmittel 12 aufweist, welches das Lager 6 und den Flexspline 2 zu einer von der Kreisform verschiedenen Form formt. Das Formungsmittel 12 ist als eine ovale, insbesondere elliptische, Scheibe ausgebildet. Das Lager 6 ist als radialflexibles Wälzlager ausgebildet, das einen Lagerinnenring 7 und einen Lageraußenring 8 sowie Wälzkörper 9 aufweist.

Das Spannungswellengetriebe weist ein Reservoir 4 auf, das Schmierfett 5 (schraffiert dargestellt) beinhaltet und von dem Wellengenerator 3 und dem topfförmigen Flexspline 2 begrenzt ist. Im Betrieb des Spannungswellengetriebes wandert das Schmierfett 5 nach und nach in kleinen Mengen aus dem Reservoir 4 durch das Lager 6 und durch den Bereich zwischen dem Lageraußenring 8 und Innenseite des topfförmigen Flexsplines 2 hinaus und gelangt auch in den Bereich zwischen einer Innenverzahnung 10 des Circularsplines 1 und einer Außenverzahnung 11 des Flexsplines 2. Der Grund für diesen Transport des Schmierfetts 5 ist die im Betrieb des Spannungswellengetriebes auf das Schmierfett 5 wirkende Zentrifugalkraft und eine durch die umlaufende Ovalisierung des topfförmigen Flexsplines 2 entstehende Pumpwirkung.

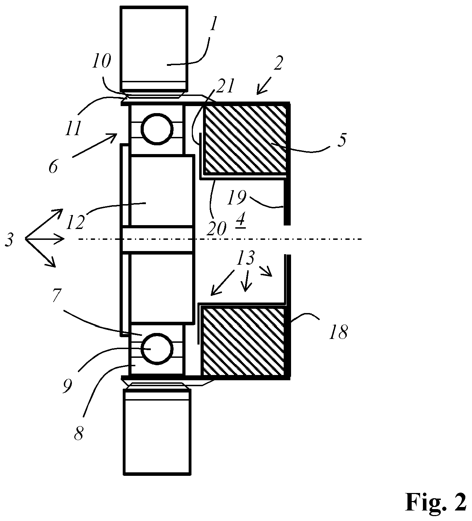

Figur 2 zeigt ein erstes Ausführungsbeispiel eines erfindungsgemäßen Spannungswellengetriebes mit einem Circularspline 1, einem topfförmigen Flexspline 2, einem Wellengenerator 3, der ein Lager 6 und ein mittels des Lagers 6 relativ zu dem Flexspline 2 rotierbar gelagertes Formungsmittel 12 aufweist, welches das Lager 6 und das mit einer Außenverzahnung 11 versehene Ende des topfförmigen Flexsplines 2 zu einer von der Kreisform verschiedenen Form formt. Das Spannungswellengetriebe weist außerdem ein unmittelbar an das Lager 6 angrenzendes Reservoir 4 auf, das Schmierfett 5 (schraffiert dargestellt) beinhaltet. Die dem Boden 18 des topfförmigen Flexsplines 2 zugewandte Seite des Wellengenerators 3 und ein Teil des Flexsplines 2 begrenzen das Reservoir 4.

An der Innenseite des Bodens 18 des topfförmigen Flexsplines 2 ist ein Kontaktverhinderungsmittel 13 befestigt, das als rotationssymmetrische Abschirmwandung ausgebildet ist und das einen unmittelbaren Kontakt des in dem Reservoir 4 befindlichen Schmierfetts 5 mit dem Formungsmittel 12 und mit dem Lagerinnenring 7 verhindert. Das Kontaktverhinderungsmittel 13 weist einen radial verlaufenden und an dem Boden 18 des topfförmigen Flexsplines 2 befestigten Befestigungsabschnitt 19, eine sich in axialer Richtung erstreckende, kreiszylinderförmige Hülse 20 sowie einen sich radial erstreckenden Abschirmring 21 auf. Der Abschirmring 21 erstreckt sich derart radial nach außen, dass auch der Lagerinnenring 7 entlang der Axialrichtung betrachtet radial abgedeckt ist.

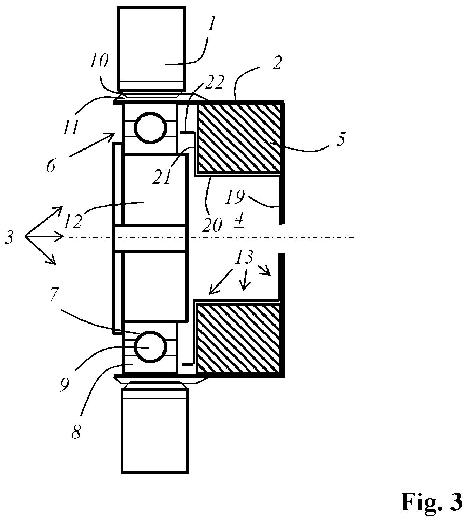

Ein axialer Spalt zwischen dem Lagerinnenring 7 und dem Abschirmring 21 ist in der Praxis zumeist unschädlich, weil das Schmierfett 5 durch die Zentrifugalkraft daran gehindert ist, durch diesen axialen Spalt unmittelbar zu dem Lagerinnenring 7 und/oder zu dem Formungsmittel 12 zu gelangen. Allerdings kann sich ganz besonders vorteilhafter Weise an den Abschirmring 21 nach eine weitere kreiszylinderförmige Hülse 22 anschließen, die sich in axialer Richtung erstreckt, so dass kein axialer Spalt verbleibt oder lediglich ein axialer Spalt verbleibt, der gerade nur so breit ist, dass ein Reibkontakt der Abschirmung mit dem Formungsmittel 12 und/oder dem Lagerinnenring 7 vermieden ist. Ein solches Ausführungsbeispiel ist schematisch in Figur 3 gezeigt.

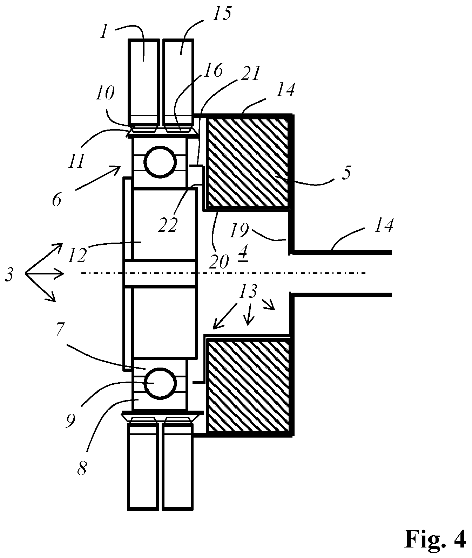

Figur 4 zeigt ein drittes Ausführungsbeispiel eines erfindungsgemäßen Spannungswellengetriebes, bei dem der Flexspline 2 ringförmig ausgebildet ist. Das Spannungswellengetriebe weist einen Circularspline 1 auf, dessen Innenverzahnung 10 mit der Außenverzahnung 11 des Flexsplines 2 an zwei gegenüberliegenden Stellen auf Grund der Verformung des Flexsplines 2 durch das Formungsmittel 12 in Zahneingriff steht. Die Anzahl der Zähne der Innenverzahnung 10 des Circularsplines 1 ist bei dieser Ausführung vorzugsweise gleich zu der Anzahl der Zähne der Innenverzahnung 10 des Flexsplines 2.

Das Spannungswellengetriebe weist außerdem einen Dynamicspline 15 auf, dessen Innenverzahnung 16 ebenfalls mit der Außenverzahnung 11 des Flexsplines 2 an zwei gegenüberliegenden Stellen auf Grund der Verformung des Flexsplines 2 und des Lagers 6 durch das Formungsmittel 12 in Zahneingriff steht. Die Anzahl der Zähne der Innenverzahnung 16 des Dynamicsplines 15 ist verschieden von der Anzahl der Zähne der Innenverzahnung 10 des Circularsplines 1.

Beispielsweise kann das Formungsmittel 12 als Antrieb fungieren, während eine an dem Dynamicspline 15 drehfest befestigte Abtriebswelle 14, die als Hohlwelle ausgebildet ist, als Abtrieb des Spannungswellengetriebes fungieren kann. Das Spannungswellengetriebe kann hierbei an dem Circularspline 1 drehfest gehalten werden, um die auftretenden Drehmomente abzustützen.

Das Spannungswellengetriebe weist außerdem ein unmittelbar an das Lager 6 angrenzendes Reservoir 4 auf, das Schmierfett 5 beinhaltet. Die als Hohlwelle ausgebildete Abtriebswelle 14 und der Wellengenerator begrenzen das Reservoir 4.

An der Innenseite der Abtriebswelle 14 ist ein Kontaktverhinderungsmittel 13 befestigt, das als rotationssymmetrische Abschirmwandung ausgebildet ist und das einen unmittelbaren Kontakt des in dem Reservoir 4 befindlichen Schmierfetts 5 mit dem Formungsmittel 12 und mit dem Lagerinnenring 7 verhindert. Das Kontaktverhinderungsmittel 13 weist einen radial verlaufenden Befestigungsabschnitt 19, eine sich in axialer Richtung erstreckende, kreiszylinderförmige Hülse 20 sowie einen sich radial erstreckenden Abschirmring 21 auf. Der Abschirmring 21 erstreckt sich derart radial nach außen, dass der Lagerinnenring 7 entlang der Axialrichtung betrachtet radial abgedeckt ist. An den Abschirmring 21 schließt sich eine weitere kreiszylinderförmige Hülse 22 an, die sich in axialer Richtung erstreckt, so dass kein axialer Spalt verbleibt, durch den Schmierfett 5 unmittelbar zu dem Lagerinnenring 7 und/oder zu dem Formungsmittel 12 gelangen könnte.

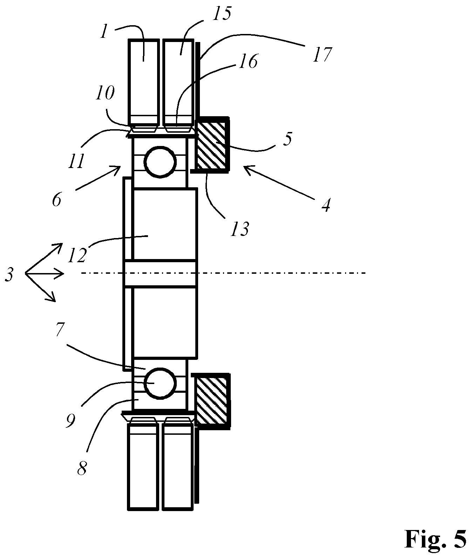

Figur 5 zeigt ein viertes Ausführungsbeispiel eines erfindungsgemäßen Spannungswellengetriebes, das als reines Ringgetriebe ausgebildet ist und bei dem beispielsweise das Formungsmittel 12 als Antrieb und der Dynamicspline 15 unmittelbar als Abtrieb fungieren kann, während das Spannungswellengetriebe an dem Circularspline 1 drehfest gehalten wird, um die auftretenden Drehmomente abzustützen.

Das Spannungswellengetriebe weist ein unmittelbar an das Lager 6 angrenzendes ringförmiges Reservoir 4 auf, das Schmierfett 5 beinhaltet und das mit einem Befestigungsring 17 an einer Stirnseite des Dynamicsplines 15 befestigt ist. Es ist ein Kontaktverhinderungsmittel 13 vorhanden, das als rotationssymmetrische Abschirmwandung ausgebildet ist und das einen unmittelbaren Kontakt des in dem Reservoir 4 befindlichen Schmierfetts 5 mit dem Formungsmittel 12 und mit dem Lagerinnenring 7 verhindert.

### Bezugszeichenliste:

- 1: Circularspline
- 2: Flexspline
- 3: Wellengenerator
- 4: Reservoir
- 5: Schmierfett
- 6: Lager
- 7: Lagerinnenring
- 8: Lageraußenring
- 9: Wälzkörper
- 10: Innenverzahnung des Circularsplines
- 11: Außenverzahnung des Flexsplines
- 12: Formungsmittel
- 13: Kontaktverhinderungsmittel
- 14: Abtriebswelle
- 15: Dynamicspline
- 16: Innenverzahnung des Dynamicspline
- 17: Befestigungsring
- 18: Boden des Flexsplines 2
- 19: Befestigungsabschnitt
- 20: kreiszylinderförmige Hülse
- 21: Abschirmring
- 22: weitere kreiszylinderförmige Hülse

## Patentansprüche

1. Spannungswellengetriebe mit einem Circularspline (1), einem Flexspline (2), einem Wellengenerator (3), der ein Lager (6) und ein mittels des Lagers (6) relativ zu dem Flexspline (2) rotierbar gelagertes Formungsmittel (12) aufweist, welches das Lager (6) und/oder den Flexspline (2) zu einer von der Kreisform verschiedenen Form formt, und mit einem unmittelbar an das Lager (6) angrenzenden Reservoir (4), das Schmierfett (5) beinhaltet, **dadurch gekennzeichnet, dass** ein Kontaktverhinderungsmittel (13), insbesondere eine Abschirmung, vorhanden ist, das einen unmittelbaren Kontakt des in dem Reservoir (4) befindlichen Schmierfetts (5) mit dem Formungsmittel (12) verhindert.

2. Spannungswellengetriebe nach Anspruch 1, **dadurch gekennzeichnet, dass**
a. das Reservoir (4) wenigstens teilweise durch wenigstens einen Teil des Wellengenerators (3) begrenzt ist und dass das Kontaktverhinderungsmittel (13) in dem Reservoir (4) angeordnet ist, und/oder dass
b. das Reservoir (4) eine Nachfüllöffnung aufweist, insbesondere wobei ein Verschluss zum Verschließen der Nachfüllöffnung vorhanden ist oder dass in der Nachfüllöffnung ein Nachfüllventil angeordnet ist.

3. Spannungswellengetriebe nach Anspruch 1 oder 2, **dadurch gekennzeichnet, dass**
a. das Formungsmittel (12) als eine ovale, insbesondere elliptische, Scheibe ausgebildet ist oder eine ovale, insbesondere elliptische, Scheibe aufweist, oder dass
b. das Formungsmittel (12) durch einen ovalen, insbesondere elliptischen, Abschnitt einer Welle ausgebildet ist, oder dass
c. das Formungsmittel (12) Teil eines Two-Rollers oder eines Three-Rollers ist.

4. Spannungswellengetriebe nach einem der Ansprüche 1 bis 3, **dadurch gekennzeichnet, dass**
a. das Lager (6) als Wälzlager ausgebildet ist, oder dass
b. das Lager (6) als Wälzlager ausgebildet ist, wobei das Wälzlager einen mit dem Formungsmittel (12) in unmittelbarem Kontakt stehenden Lagerinnenring (7) aufweist, und dass das Kontaktverhinderungsmittel (13) auch einen unmittelbaren Kontakt des in dem Reservoir (4) befindlichen Schmierfetts (5) mit dem Lagerinnenring (7) verhindert und/oder dass
c. der Wellengenerator (3) eine Kupplung, insbesondere eine Oldhamkupplung, beinhaltet.

5. Spannungswellengetriebe nach einem der Ansprüche 1 bis 4, **dadurch gekennzeichnet, dass**
a. das Reservoir (4) zumindest eine Öffnung aufweist, und/oder dass
b. das Reservoir (4) zumindest eine Öffnung aufweist die Öffnung derart angeordnet ist, dass Schmierfett (5) aus dem Reservoir (4) unmittelbar zu dem Lager (6) gelangen kann, mittels dem das Formungsmittel (12) relativ zu dem Flexspline (2) rotierbar gelagert ist, und/oder dass
c. Spannungswellengetriebe nach Anspruch 8 oder 9, **dadurch gekennzeichnet, dass** das Reservoir (4) zumindest eine Öffnung aufweist, die im Wesentlichen ringförmig ausgebildet ist, und/oder dass
d. das Reservoir (4) zumindest eine Öffnung aufweist, die koaxial zu dem Wellengenerator (3) und/oder koaxial zu dem Flexspline (2) und/oder koaxial zu dem Circularspline (1) angeordnet ist, und/oder dass
e. das Reservoir (4) zumindest eine Öffnung aufweist, die als Spalt zwischen dem Flexspline (2) und dem Kontaktverhinderungsmittel (13) ausgebildet ist, und/oder dass
f. das Reservoir (4) zumindest eine Öffnung aufweist, die in einer Abschirmwandung des Kontaktverhinderungsmittels ausgebildet ist.

6. Spannungswellengetriebe nach einem der Ansprüche 1 bis 5, **dadurch gekennzeichnet, dass**
a. das Formungsmittel (12) relativ zu dem Kontaktverhinderungsmittel (13) rotierbar angeordnet ist, und/oder dass
b. das Kontaktverhinderungsmittel (13) in keinem unmittelbaren Kontakt zu dem Formungsmittel (12) oder zu einen mit dem Formungsmittel (12) unmittelbar, insbesondere starr, verbundenen Bauteil, insbesondere einem mit dem Formungsmittel (12) in unmittelbarem Kontakt stehenden Lagerinnenring (7), steht, und/oder dass
c. das Kontaktverhinderungsmittel (13) an einem Getriebebauteil angeordnet, insbesondere befestigt, ist, das mit einer geringeren Rotationsfrequenz rotiert, als das Formungsmittel (12), und/oder dass
d. das Kontaktverhinderungsmittel (13) in keinem unmittelbaren Kontakt zu dem Lager (6) des Wellengenerators (3) steht, und/oder dass
e. Kontaktverhinderungsmittel (13) in keinem unmittelbaren Kontakt zu dem Wellengenerator (3) steht.

7. Spannungswellengetriebe nach einem der Ansprüche 1 bis 6, **dadurch gekennzeichnet, dass**
a. das Spannungswellengetriebe eine drehstarr mit dem Formungsmittel (12) verbundene erste Welle aufweist, die wenigstens teilweise in dem Reservoir (4) angeordnet ist, oder dass das Formungsmittel (12) durch einen Abschnitt einer ersten Welle gebildet ist, die wenigstens teilweise in dem Reservoir (4) angeordnet ist, oder dass
b. das Spannungswellengetriebe eine drehstarr mit dem Formungsmittel (12) verbundene erste Welle aufweist, die wenigstens teilweise in dem Reservoir (4) angeordnet ist, oder dass das Formungsmittel (12) durch einen Abschnitt einer ersten Welle gebildet ist, die wenigstens teilweise in dem Reservoir (4) angeordnet ist, wobei das Kontaktverhinderungsmittel (13) auch einen unmittelbaren Kontakt des in dem Reservoir (4) befindlichen Schmierfetts (5) mit der ersten Welle verhindert.

8. Spannungswellengetriebe nach einem der Ansprüche 1 bis 7, **dadurch gekennzeichnet, dass**
a. der Flexspline (2) einen Teil einer das Reservoir (4) begrenzenden Wandung bildet, und/oder dass
b. das Kontaktverhinderungsmittel (13), insbesondere unmittelbar und/oder drehstarr, an dem Flexspline (2) angeordnet, insbesondere befestigt, ist.

9. Spannungswellengetriebe nach einem der Ansprüche 1 bis 8, **dadurch gekennzeichnet, dass**
a. das Spannungswellengetriebe eine zweite Welle, insbesondere eine als Hohlwelle ausgebildete zweite Welle, aufweist, oder dass
b. das Spannungswellengetriebe eine zweite Welle, insbesondere eine als Hohlwelle ausgebildete zweite Welle, aufweist, wobei die zweite Welle, insbesondere unmittelbar und/oder drehstarr, mit dem Flexspline (2) oder mit dem Circularspline (1) oder, insbesondere bei einer ringförmigen Ausbildung des Flexsplines (2), einem Dynamicspline verbunden ist, oder dass
c. das Spannungswellengetriebe eine zweite Welle, insbesondere eine als Hohlwelle ausgebildete zweite Welle, aufweist, wobei das Kontaktverhinderungsmittel (13), insbesondere unmittelbar und/oder drehstarr, an der zweiten Welle befestigt ist.

10. Spannungswellengetriebe nach einem der Ansprüche 1 bis 9, **dadurch gekennzeichnet, dass**
a. das Kontaktverhinderungsmittel (13), insbesondere ausschließlich, reibschlüssig befestigt ist, oder dass
b. das Kontaktverhinderungsmittel (13), insbesondere ausschließlich, formschlüssig befestigt ist, oder dass
c. das Kontaktverhinderungsmittel (13), insbesondere ausschließlich, stoffschlüssig befestigt ist.

11. Spannungswellengetriebe nach Anspruch 9, **dadurch gekennzeichnet, dass**
a. das Kontaktverhinderungsmittel (13) gemeinsam einstückig mit der zweiten Welle hergestellt ist, oder dass
b. die zweite Welle gemeinsam einstückig mit dem Flexspline (2) oder mit dem Circularspline (1) oder, insbesondere bei einer ringförmigen Ausbildung des Flexsplines (2), einem Dynamicspline hergestellt ist.

12. Spannungswellengetriebe nach einem der Ansprüche 1 bis 11, **dadurch gekennzeichnet, dass**
a. das Kontaktverhinderungsmittel (13) oder wenigsten eine Abschirmwandung des Kontaktverhinderungsmittels (13) rotationssymmetrisch, insbesondere in einem Axialquerschnitt kreisrund, ausgebildet ist, und/oder dass
b. an einer Abschirmwandung des Kontaktverhinderungsmittels (13) wenigstens eine Verstärkung, insbesondere eine Verstärkungsstrebe oder eine zickzackförmige Verstärkung, angeordnet ist, und/oder dass
c. das Kontaktverhinderungsmittel (13) koaxial zu dem Wellengenerator (3) und/oder koaxial zu dem Flexspline (2) und/oder koaxial zu dem Circularspline (1) angeordnet ist, und/oder dass
d. das Kontaktverhinderungsmittel (13) axial in den von dem Lager (6) umgebenen Raum ragt.

13. Roboter, insbesondere Industrieroboter, beinhaltend wenigstens ein Spannungswellengetriebe nach einem der Ansprüche 1 bis 12, oder Robotergelenk, das wenigstens ein Spannungswellengetriebe nach einem der Ansprüche 1 bis 12 aufweist.

14. Fahrzeugkomponente, die wenigstens ein Spannungswellengetriebe nach einem der Ansprüche 1 bis 12 aufweist.

15. Fahrzeugkomponente nach Anspruch 14, **dadurch gekennzeichnet, dass**
a. die Fahrzeugkomponente als Fahrwerk, insbesondere aktives Fahrwerk für ein Kraftfahrzeug, ausgebildet ist, oder dass
b. die Fahrzeugkomponente als Lenkung, insbesondere PKW-Lenkung oder LKW-Lenkung, ausgebildet ist, oder dass
c. die Lenkung eine Servolenkung und/oder eine Überlagerungslenkung ist.
